# EUROPÄISCHE PATENTANMELDUNG

(11) **EP 1 101 663 A2**
(43) Veröffentlichungstag der Anmeldung: **23.05.2001**
(21) Anmeldenummer: 00121929.4
(22) Anmeldetag: 09.10.2000
(51) Int. Cl.: B60R 21/20

(54) **Als Schwingungsdämpfermasse wirkender Gasgenerator**

(30) Priorität: 18.11.1999 DE 19955426
(71) Anmelder: Firma Carl Freudenberg, 69469 Weinheim (DE)
(72) Erfinder: Dürre, Markus, 79379 Müllheim (DE)

(57) **Zusammenfassung**

Gasgenerator für einen Airbag am Kraftfahrzeuglenkrad, der beweglich als Schwingungsdämpfermasse über ein an seiner Außenwand und an einem Halteblech angeschlossenes, gasundurchlässiges, ringförmiges Federelement aus polymerem Material im Abstandstopf und / oder einem Schutzmantel des Airbaggehäuses gehalten wird, wobei zwischen dem Gasgenerator und der Innenwand des Abstandstopfes oder Schutzmantels ein freier Schwingweg für die Schwingmasse belassen ist, wobei das Federelement (4) mit mehreren auf seinem Außenumfang verteilten, Stöße dämpfenden elastischen Vorsprüngen (8) versehen ist, die bei Überschreiten des freien Schwingwegs (13) ein definiertes Abbremsen der Schwingmasse bewirken.

## Beschreibung

### Technisches Gebiet

Die Erfindung betrifft einen Gasgenerator für einen Airbag an einem Kraftfahrzeuglenkrad, der beweglich als Schwingungsdämpfermasse über ein an seiner Außenwand und an einem Halteblech angeschlossenes, gasundurchlässiges, ringförmiges Federelement aus polymerem Material im Abstandstopf und / oder einem Schutzmantel des Airbaggehäuses gehalten wird, wobei zwischen dem Gasgenerator und der Innenwand des Abstandstopfes oder Schutzmantels ein freier Schwingweg für die Schwingmasse belassen ist.

Die bei Kraftfahrzeugen während der Fahrt oder auch im Stillstand mit laufendem Motor auftretenden Schwingungen können sich auf die Lenksäule übertragen und von dort aus auf das Lenkrad. Um diesen Schwingungen am Lenkrad entgegenzuwirken und den Fahrkomfort zu verbessern, sind Schwingungstilger entweder direkt an der Lenksäule oder im Lenkrad unterhalb des dort befindlichen Airbagmoduls angebracht worden. Neuere Lösungen beziehen das Airbagmodul oder auch den Gasgenerator als Schwingmasse ein.

### Stand der Technik

Aus der DE-OS 39 25 761 ist beispielsweise eine Konstruktion bekannt, bei der entweder das Airbagmodul oder ein Teil davon, in diesem Falle, der Gasgenerator, als Trägheitsmasse verwendet werden. Für den Fall, daß der Gasgenerator die Trägheitsmasse ist, wird der Gasgenerator von einem netzartigen Abdeckteil umgeben, der verhindert, daß der Airbag und der Gasgenerator in Kontakt miteinander kommen. Der Airbag könnte dadurch beschädigt und die Beweglichkeit des Gasgenerators behindert werden. Bei einer solchen Ausbildung von Airbag und Gasgenerator ist eine Selbstzündung des Gasgenerators nicht auszuschließen, da derselbe mit hoher Beschleunigung schwingen kann. Nachteilig ist auch, daß die gewählten Verbindungsmittel zwischen Gasgenerator und Airbag, Schrauben oder Nieten mit elastischen Manschetten, nur kleine Schwingungsamplituden zulassen. Das Verformungsvermögen der benutzten elastischen Mittel wird durch die eigentlichen Verbindungsmittel (Nieten, Schrauben) stark eingeschränkt.

Eine andere, in dem DE-Gebrauchsmuster 299 02 033 offenbarte Lösung besteht in einem am Gasgeneratorträger angeordneten ringförmigem Montageblech, einem mit dem Gehäuse des Gasgenerators verbundenen, umlaufenden Montageflansch, sowie einem parallel zur Lenkachse ausgerichteten Montagezylinder aus einem elastischen Werkstoff, dessen freie Ränder einerseits mit dem Montageblech und andererseits mit dem Montageflansch verbunden sind. Auf die Weise ist der Gasgenerator allein über den aus elastischem Werkstoff bestehenden Montagezylinder mit den übrigen Bauteilen des Airbagmoduls verbunden. Durch konstruktive Gestaltung und Materialauswahl kann der Montagezylinder an unterschiedliche Bedürfnisse angepaßt werden, so daß die vom Fahrzeugtyp zu Fahrzeugtyp unterschiedlichen Vibrationen wirksam unterdrückt werden können. Durch diese Lösung wird zwar eine sehr gute Schwingungsdämpfung erreicht, jedoch kann weiterhin der Sprengstoff und auch andere Komponenten des Gasgenerators durch zu hohe Beschleunigungen (Stöße) zerstört werden. Dieses ist besonders dann der Fall, wenn zum Schutz des Airbags ein Abstandstopf zwischen Gasgenerator und Airbag vorgesehen ist und der Gasgenerator an die Wand des Abstandskopfes anschlägt. Abgesehen von der Zerstörungsmöglichkeit sind auch die beim Anschlagen des Gasgenerators an die Wand des Abstandstopfes entstehenden Geräusche lästig.

### Darstellung der Erfindung

Der Erfindung liegt deshalb die Aufgabe zugrunde, eine konstruktive Ausbildung für das Airbagmodul zu finden, bei dem die genannten Nachteile vermieden werden. Die Lösung der gestellten Aufgabe erfolgt mit den Merkmalen des Anspruches 1. Bei einem Gasgenerator für einen Airbag mit einem gasundurchlässigen Federelement aus polymerem Material wird das Federelement mit mehreren, auf seinem Außenumfang verteilten, Stöße dämpfenden, elastischen Vorsprüngen versehen, die bei Überschreiten des freien Schwingwegs der Trägheitsmasse, d. h. des Gasgenerators, eine definiertes Abbremsen der Schwingmasse bewirken. Beschädigungen am Gasgenerator oder an Teilen davon, werden dadurch vermieden.

Das Federelement ist als nach oben offener, hülsenförmiger Kegelstumpf ausgebildet. Eine solche Ausgestaltung des Federelements ergibt fertigungstechnische Vorteile beim Vulkanisieren und wirkt Schwingbewegungen des Gasgenerators in radialer Richtung entgegen.

Die Vorsprünge werden bevorzugt an dem Teil des Federelements angeordnet, das am Gasgenerator angeschlossen ist. Die Verbindung von Gasgenerator und Federelement wird bevorzugt über einen innen liegenden Ring bewerkstelligt, der mit Preßsitz auf die Außenwand des Gasgenerators aufgepreßt wird. Der Ring ist mit dem Federelement durch Vulkanisation verbunden. Es ist günstig, wenn der Ring sich über die gesamte Höhe der Vorsprünge erstreckt. Möglich ist selbstverständlich auch eine Verbindung des Ringes mit der Außenwand des Gasgenerators, die formschlüssig ausgestaltet ist. Um die Montage des Ringes auf der Gasgeneratoraußenwand zu erleichtern, ist der Ring an seinem oberen Rand leicht umgebördelt. Dadurch entsteht eine trichterartige Rundung, welche das Aufsetzen des Ringes erleichtert. Andere konstruktive Lösungen sind hier möglich, ohne den erfinderischen Gedanken zu verlassen

Das am Halteblech angeschlossene Ende des Federelements wird am Halteblech anvulkanisiert. Dabei ist es zweckmäßig, wenn das Federelementende den Rand des Halteblechs wulstartig umfaßt.

Durch die Gestaltung der Vorsprünge kann eine definierte Federrate vorgegeben werden. So können die Vorsprünge jeweils wenigstens einen lippenartigen oder auch kegelstumpfförmigen Ansatz haben. Je geringer die Berührungsfläche zwischen den Ansätzen und dem Abstandstopf ist, um so größer ist die Federrate und umgekehrt. Die Vorsprünge verbinden auch, daß durch einen flächigen Kontakt zwischen Federelement und Abstandskopf ein Schmatzgeräusch entstehen kann.

### Kurzbeschreibung der Zeichnung

Die Erfindung wird nachfolgend anhand der Zeichnungen näher erläutert:

Es zeigt:
- Fig. 1: einen Schnitt durch das Gasgeneratorgehäuse gemäß der Linie A-A der Fig. 2,
- Fig. 2: den Gasgenerator mit dem Federelement und dem Halteblech in der Draufsicht,
- Fig. 3: einen Schnitt durch die linke Hälfte des Gasgenerators mit Abstandstopf in vergrößerter Darstellung,
- Fig. 4: einen Vorsprung mit lippenartigen Ansätzen im Schnitt in vergrößerter Darstellung, und
- Fig. 5/6: im Schnitt die Ansätze zusammengedrückt.

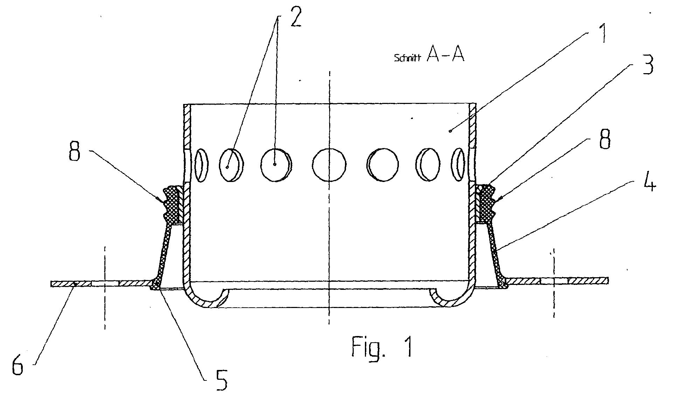

In der Fig. 1 ist das Gehäuse 1 für einen Gasgenerator eines Lenkradairbags im Schnitt gezeigt. Das Gehäuse 1 dient zur Aufnahme der Explosivpackung und ist für den Austritt der Explosivgase oben offen und an der Seite mit Durchtrittsöffnungen 2 versehen. Das Gehäuse 1 ist von einem Ring 3 umgeben, der durch Preßsitz mit dem Gehäuse 1 verbunden ist. Am Ring 3 ist das Federelement 4 befestigt, das als ringförmige Membran ausgebildet ist und das Gehäuse 1 zumindest teilweise umschließt. Im Ausführungsbeispiel ist das Federelement als hülsenförmiger Kegelstumpf ausgebildet. Mit seinem unteren Ende 5 ist das Federelement 4 mit dem Halteblech 6 verbunden. Die Verbindung erfolgt über Vulkanisation in gleicher Weise wie die Verbindung des Ringes 3 mit dem Federelement 4.

Das Halteblech 6 ist mit den Öffnungen 7 versehen, die für Befestigungschrauben oder dergleichen zur Befestigung am Airbaggehäuse vorgesehen sind.

Das Federelement 4 ist mit mehreren, auf seinem Umfang verteilten elastischen Vorsprüngen 8 versehen, die ein zusätzliches Abbremsen der durch den Gasgenerator gebildeten Schwingmasse bei Überschreiten des freien Schwingwegs bewirken. Schwingungen, die von der Lenkradsäule ausgehen und auf das Halteblech 6 übertragen werden, werden durch das Federelement 4 und die durch den Gasgenerator gebildete Dämpfermasse gedämpft. Die kegelstumpfförmige Ausbildung des Federelements 4 ergibt hierbei besonders günstige Ergebnisse. Für den Fall jedoch, daß die Tilgermasse einen vorgegebenen Schwingweg überschreitet, kommen die Vorsprünge 8 an der Wand eines den Gasgenerator umgebenden Abstandstopfes 9 oder Schutzmantels zur Anlage und dämpfen dann in vorbestimmbarer Weise die Schwingung des Gasgenerators.

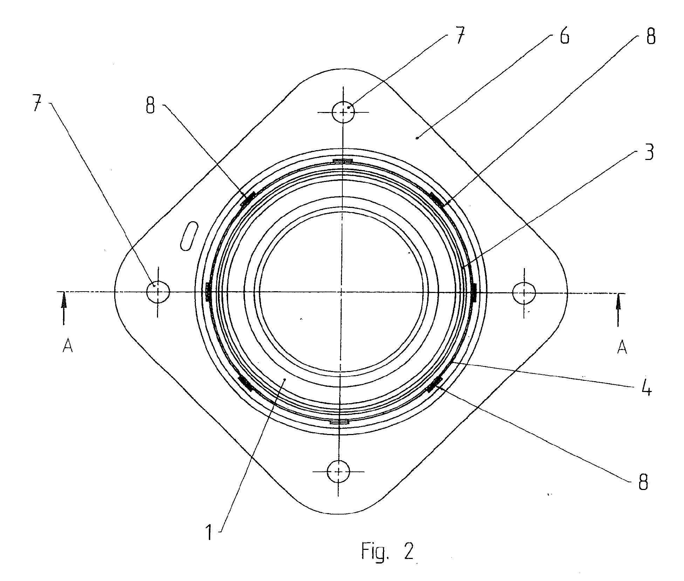

Die Fig. 2 zeigt eine Draufsicht auf das Gasgeneratorgehäuse 1 mit Federelement 4 und Halteblech 6. Das Halteblech 6 ist etwa quadratisch und hat die Befestigungsöffnungen 7. Am Gehäuse 1 liegt der Montagering 3 an, an dem das Federelement 4 befestigt ist. Das Federelement 4 ist auf seinem Umfang verteilt mit acht Vorsprüngen 8 versehen.

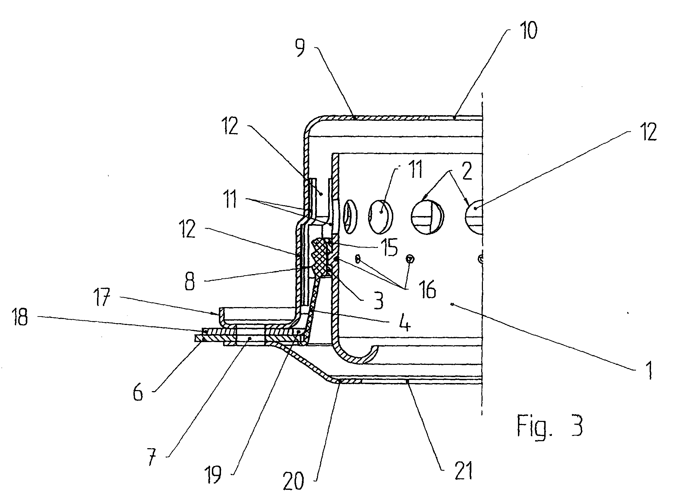

In der Fig. 3 ist vergrößert im Schnitt das Gehäuse 1 des Gasgenerators gezeigt, wobei das Gehäuse 1 von dem Abstandstopf 9 umgeben ist, der den am Abstandskopf 9 außen anliegenden Airbag vor Berührungen mit dem schwingenden Gehäuse 1 schützt. Das Gehäuse 9 hat die zentrale Öffnung 10 für den Austritt der Gase und ist außerdem auf seiner Wandung mit einer Reihe von senkrechten Schlitzen 11, ebenfalls für den Gasaustritt versehen. Die zwischen den Schlitzen 11 verbliebenen Wandteile 12 liegen im Bereich der Vorsprünge 8 des Federelements 4. Der Abstand zwischen den Spitzen der Vorsprünge 8 und der Wand 12 des Abstandstopfs 9 ergibt den freien Schwingweg 13 für den Gasgenerator. Wenn dieser Schwingweg 13 überschritten ist, erfolgt ein definiertes Abbremsen der Tilgermasse durch die Vorsprünge 8.

Der auf das Gasgeneratorgehäuse 1 aufgepreßte Ring 3 ist an seinem oberen Rand 15 umgebördelt, was das Aufsetzen des Ringes 3 auf das Gehäuse 1 erleichtert. Zusätzlich zum Preßsitz ist der Ring 3 mit dem Gehäuse 1 durch die punktförmigen Auswölbungen 16 formschlüssig verbunden.

Der Abstandstopf 9 ist mit dem Tellerrand 17 versehen, der Öffnungen hat, die mit den Öffnungen 7 korrespondieren. Er wird mit dem Halteblech 6 verschraubt. Zwischen Halteblech 6 und Tellerrand 17 ist der Rand 18 der Gassacköffnung 19 eingefügt und festgeklemmt. Mit dem Halteblech 6 ist außerdem das Schutzblech 20 verbunden, welches verhindert, daß der Gasgenerator nach einem Abreißen des Federelements 4 aus seiner Halterung herausfallen kann. Das Schutzblech 20 ist mit der Öffnung 21 versehen.

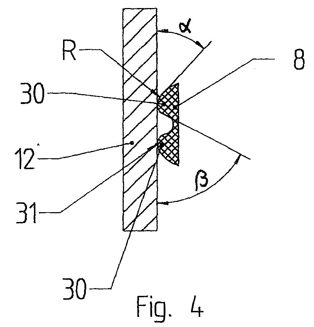

In der Fig. 4 ist im Schnitt die Ausbildung eines Vorsprungs 8 gezeigt, der eine vorgegebene Federrate ergibt, die Vorsprünge 8 haben die lippenartigen Ansätze 30. Zwischen den Scheitellinien 31 und der Wand 12 des Abstandstopfes 9 ist der Schwingweg für den Gasgenerator vorhanden. Wenn dieser Schwingweg durch die Amplitude des Gasgenerators überschritten ist, kommen die Ansätze 30 zunächst linienförmig an der Wand 12 des Abstandstopfes zum Anliegen, wie in der Fig. gezeigt. Die Ansätze 30 werden dann je nach Größe der Amplitude zusammengedrückt, dadurch ergibt sich eine definierte Abbremsung der Tilgermasse.

Die Abbremsung kann noch dadurch gesteuert werden, indem der Außenwinkel α und der Innenwinkel β an den Lippen 30 unterschiedlich ausgebildet wird. Bevorzugt wird der Winkel β größer gewählt als der Winkel α. Außerdem können die Radien R zu den Scheitellinien 31 unterschiedlich gewählt werden. Je größer der Radius R, um so stärker ist die Federrate.

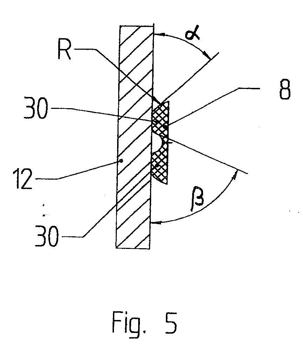

In der Fig. 5 sind die Ansätze 30 weiter zusammengepreßt und es erfolgt eine stärkere Abbremsung der Schwingungsmasse.

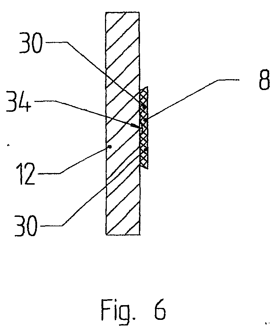

Die Fig. 6 zeigt ein noch weiteres Zusammenpressen der Ansätze 30 und damit die Abbremswirkung.

Es versteht sich, daß die Abbremswirkung durch die Wahl des eingesetzten Polymermaterials mitbestimmt wird. Hier sind dem Fachmann verschiedene Möglichkeiten gegeben.

## Patentansprüche

1. Gasgenerator für einen Airbag am Kraftfahrzeuglenkrad, der beweglich als Schwingungsdämpfermasse über ein an seiner Außenwand und an einem Halteblech angeschlossenes, gasundurchlässiges, ringförmiges Federelement aus polymerem Material im Abstandstopf und / oder einem Schutzmantel des Airbaggehäuses gehalten wird, wobei zwischen dem Gasgenerator und der Innenwand des Abstandstopfes oder Schutzmantels ein freier Schwingweg für die Schwingmasse belassen ist, dadurch gekennzeichnet, daß das Federelement (4) mit mehreren auf seinem Außenumfang verteilten, Stöße dämpfenden elastischen Vorsprüngen (8) versehen ist, die bei Überschreiten des freien Schwingwegs (13) ein definiertes Abbremsen der Schwingmasse bewirken.

2. Gasgenerator nach Anspruch 1, dadurch gekennzeichnet, daß das Federelement (4) als hülsenförmiger Kegelstumpf ausgebildet ist.

3. Gasgenerator nach Anspruch 1 oder 2, dadurch gekennzeichnet, daß die Vorsprünge (8) an dem Teil des Federelements (4) angeordnet sind, das am Gasgenerator (1) angeschlossen ist.

4. Gasgenerator nach Anspruch 3, dadurch gekennzeichnet, daß das am Gasgenerator (1) angeschlossene Teil des Federelements (4) mit einem innenliegenden Ring (3) versehen ist.

5. Gasgenerator nach Anspruch 4, dadurch gekennzeichnet, daß der Ring (3) sich über die gesamte Höhe der Vorsprünge (8) erstreckt.

6. Gasgenerator nach Anspruch 4 oder 5, dadurch gekennzeichnet, daß der Ring (3) mit seiner Außenfläche mit dem als Gummimembran ausgebildeten Federelement (4) durch Vulkanisation verbunden ist.

7. Gasgenerator nach einem der Ansprüche 4 bis 6, dadurch gekennzeichnet, daß der Ring (3) formschlüssig mit dem Gehäuse (1) des Gasgenerators verbunden ist.

8. Gasgenerator nach Anspruch 7, dadurch gekennzeichnet, daß der Ring (3) an seinem oberen Rand (15) umgebördelt ist.

9. Gasgenerator nach einem der Ansprüche 1 bis 8, dadurch gekennzeichnet, daß das am Halteblech (6) angeschlossene Ende (5) des Federelements (4) am Halteblech (6) anvulkanisiert ist.

10. Gasgenerator nach Anspruch 9, dadurch gekennzeichnet, daß das Federelementende (5) den Rand des Halteblechs (6) wulstartig umfaßt.

11. Gasgenerator nach einem der Ansprüche 1 bis 10, dadurch gekennzeichnet, daß durch die Gestaltung der Vorsprünge (8) eine definierte Federrate vorgegeben ist.

12. Gasgenerator nach einem der Ansprüche 1 bis 11, dadurch gekennzeichnet, daß die Vorsprünge (8) jeweils wenigstens einen lippenartigen Ansatz (30) haben.
